(19) Europäisches Patentamt
European Patent Office
Office européen des brevets

(11) **EP 2 852 068 B1**

(12) **EUROPEAN PATENT SPECIFICATION**

(45) Date of publication and mention
of the grant of the patent:
**25.05.2016 Bulletin 2016/21**

(51) Int Cl.:
*H04B 3/32* *(2006.01)*          *H04J 3/10* *(2006.01)*
*H04M 3/18* *(2006.01)*

(21) Application number: **13306295.0**

(22) Date of filing: **23.09.2013**

(54) **Method and system for data transmission between a distribution point unit and an end user device**

Verfahren und System zur Datenübertragung zwischen einem Verteilungspunkteinheit und einer Endbenutzervorrichtung

Procédé et système de transmission de données entre une unité de point de distribution et un dispositif d'utilisateur final

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.03.2015 Bulletin 2015/13**

(73) Proprietor: **ALCATEL LUCENT
92100 Boulogne-Billancourt (FR)**

(72) Inventors:
• **Maes, Jochen
2018 Antwerp (BE)**
• **Timmers, Michael
2018 Antwerp (BE)**

(74) Representative: **ALU Antw Patent Attorneys
Copernicuslaan 50
2018 Antwerpen (BE)**

(56) References cited:
**US-A1- 2008 123 755     US-A1- 2010 278 328
US-A1- 2013 208 579     US-A1- 2014 023 190
US-B1- 6 480 475**

**Description**

Field of Invention

The field of the invention relates to data transmission between a number of distribution point units (DPU's) and a number of end user devices, over a plurality of lines. Particular embodiments relate to the field of G.fast and reducing crosstalk in the lines.

Background

Typically, G.fast assumes that either crosstalk cancellation is present, or that there is no crosstalk between the lines. However, there are cases in which crosstalk cancellation is cumbersome, but in which crosstalk may still be present. Typically, those cases revolve around distributed DPUs.

US 2008/0123755 discloses a device comprising a terminal to receive a first transmission signal; a machine generating information related to crosstalk by comparing first information based on the received first transmission signal with second information based on predetermined information; and a transmitter coupled to the terminal to transmit a second signal representing the second information.

Summary

The object of embodiments of the invention is to provide a method and system allowing improving the stability of the lines, and in particular reducing crosstalk between lines.

The invention relates to a method for transmitting data between a number of distribution point units (DPU's) and a number of end user devices, over a plurality of lines, having the features of claim 1. The method comprises the following steps. The plurality of lines is grouped in at least a first set and a second set. A first number of time slots is allocated to the first set, and a second number of times slots is allocated to the second set. The one or more lines of the first set are allowed to simultaneously transmit data during the first number of time slots; and the one or more lines of the second set are allowed to simultaneously transmit data during the second number of time slots. This allowing of transmitting data is controlled in such a way that the first set and the second set transmit at different moments in time.

Embodiments of the invention are based *inter alia* on the insight that it is possible to enable time division multiple access to the lines, so that not all lines are allowed to transmit at the same time. By grouping the lines in sets, wherein the lines of a set are allowed to transmit simultaneously while the lines of different sets are not, crosstalk can be reduced. More in particular, in the case of G.fast, it is possible to enable time division multiple access (TDMA) to the lines without altering the G.fast specification. In exemplary embodiments, this may be achieved through coordination of Timing Control Entity (TCE) and Dynamic Resource Allocation (DRA) functionalities, see further.

The method further comprises assigning a first and second downstream/upstream ratio for the first and second set, respectively. The first and second downstream/upstream ratio defines a number of time slots of the first and second number that may be used for downstream transmission and for upstream transmission, respectively. Downstream transmission corresponds with a transmission from a DPU to an end user device, and upstream transmission corresponds with a transmission from an end user device to a DPU. The first and/or second downstream/upstream ratio may be determined in function of downstream and/or upstream traffic demands for the first and/or second set, respectively. E.g. if the first set requires a lot of downstream traffic, the first downstream/upstream ratio may be determined to allow a large amount of downstream traffic whilst only allowing a small amount of upstream traffic (or no upstream traffic).

In an embodiment the grouping is performed based on estimated crosstalk between the lines. E.g. lines showing little or no crosstalk with respect to each other may be grouped in the same set, whilst lines showing a lot of crosstalk with respect to each other may be grouped in a different set. The grouping may be operator configured. E.g. lines from the same operator for which crosstalk cancellation is performed may be grouped in the same set, while lines from different operator are grouped in different sets. In other words, the grouping may be performed in such a manner that lines that show a lot of crosstalk with respect to each other, are in different sets.

In a possible embodiment the plurality of lines consists of at least three lines, and the number of sets is lower than the number of lines. In other words, in such an embodiment there will be at least one set with at least two lines. In typical embodiments, there are provided between two and six sets, and there is at least one set that comprises at least two lines. In such embodiments the invention may be very useful to reduce crosstalk.

A first and a second offset time is determined for at the first and second set, respectively. The first and second offset time indicate the start of a transmission period, e.g. a downstream transmission period, for the first and second set with respect to a common time reference, respectively. This offset time may correspond to a TCE (Time Control Entity) offset as used by a TCE in a DPU. The first and second set is allowed to start transmission at the first and second offset time during a first and second period corresponding with the first and second downstream/upstream ratio, respectively.

In an embodiment the second set may be allowed to perform downstream transmission immediately after the first set is allowed to perform downstream transmission; and/or the second set may be allowed to perform upstream transmission immediately after the first set is allowed to perform upstream transmission. Such embodiments will allow limiting the lost amount of time slots for data transmission due to the presence of guard intervals between downstream and upstream transmission.

In a possible embodiment the one or more lines of the first set are allowed to simultaneously transmit data during the first number of time slots, in a specified communication direction (upstream or downstream); and the one or more lines of the second set are allowed to simultaneously transmit data during the second number of time slots, in a specified communication direction (upstream or downstream).

In other words, in such an embodiment all lines of a set transmit in the same communication direction which may be upstream or downstream. However, in other embodiments, it is possible that certain line(s) of a set transmit in a downstream direction, while, simultaneously, other line(s) of a set transmit in an upstream direction.

According to another aspect of the invention, there is provided a management system for controlling the transmission of data between a number of DPU's and a number of end user devices, over a plurality of lines. The system comprises a grouping module, an allocation module and a controller. The grouping module is configured for grouping the plurality of lines in at least a first set and a second set. The allocation module is configured for allocating a first number of time slots to the first set; and a second number of times slots to the second set. The controller is configured to control the number of DPU's in order to allow the lines of the first set to simultaneously transmit data during the first number of time slots, and to allow the lines of the second set to simultaneously transmit data during the second number of time slots, such that the first set and the second set transmit at different moments in time.

The management system may further comprise a downstream/upstream assignment module configured to assign a first and second downstream/upstream ratio indicating the number of time slots of the first and second number that may be used for downstream transmission, respectively. The controller is further configured to control the number of DPU's in accordance with the first and second downstream/upstream ratio. In a preferred embodiment the downstream/upstream assignment module may be configured for assigning the first and/or second downstream/upstream ratio in function of downstream and/or upstream traffic demands for the first and/or the second set, respectively.

In a preferred embodiment the grouping module is configured to perform the grouping based on estimated crosstalk between the plurality of lines and/or based on operator information.

The management system may further comprise an offset determining module configured for determining a first and a second offset time for the first and second set, respectively. The first and second offset time indicate the start of a transmission period, e.g. a downstream transmission period, for the first and second set with respect to a common time reference, respectively. The controller is configured to communicate the first and second offset time to the number of DPU's. Preferably the offset determining module is configured for allowing the second set to perform downstream transmission immediately after the first set is allowed to perform downstream transmission.

The management system may further comprise an upstream/downstream interval determining module configured for determining a first and second upstream/downstream interval indicating a number of time slots between the start of a downstream transmission period for the first and second set and the start of an upstream transmission period for the first and second set, respectively. It is noted that this upstream/downstream interval may be a negative value when the upstream transmission for a set takes place before the downstream transmission of that set, i.e. the upstream transmission of a set may take place after a downstream transmission of another set. Preferably, the upstream/downstream interval determining module is configured for allowing the second set to perform upstream transmission immediately after the first set is allowed to perform upstream transmission. By grouping the upstream transmission possibilities one after the other the number of guard intervals between downstream and upstream can be limited.

According to a further aspect of the invention, there is provided a computer device or other hardware device programmed to perform one or more steps of any one of the embodiments of the method disclosed above. According to another aspect there is provided a data storage device encoding a program in machine-readable and machine-executable form to perform one or more steps of any one of the embodiments of the method disclosed above.

Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:

Figures 1A-D illustrates schematically a number of DPU implementations in which embodiments of the method and system of the invention may be used;

Figure 2A is a block diagram illustrating a DPU implementation with a first embodiment of a management system of the invention;

Figure 2B is a block diagram illustrating a DPU implementation with a second embodiment of a management system of the invention;

Figure 3 illustrates downstream and upstream transmit opportunities as controlled by a timing control entity (TCE) and a dynamic resource allocation (DRA) controller;

Figures 4-10 illustrate different embodiments of the method of the invention.

Description of embodiments

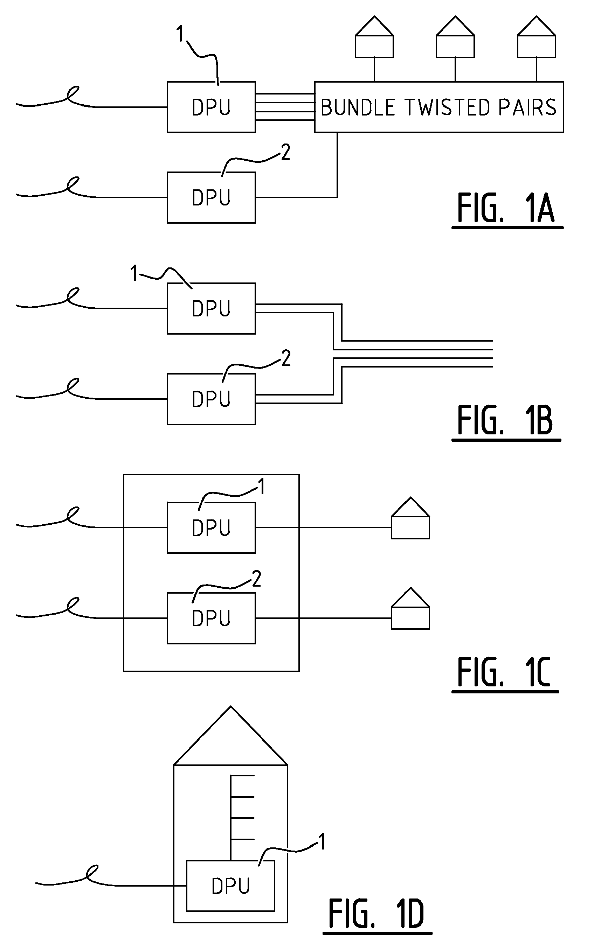

Typically, G.fast assumes that either crosstalk cancellation is present, or that there is no crosstalk between the lines. However, there are cases in which crosstalk cancellation is cumbersome, but in which crosstalk may still be present. Those cases revolve around distributed DPUs. Figures 1A-1D illustrate a number of DPU implementations in which crosstalk cancellation may be present, while crosstalk cancellation would be difficult or impossible to perform. Figure 1A illustrates a case of non-co-location where a line of a second DPU 2 is located near a bundle of lines of a first DPU 1. Figure 1B illustrates a case of unbundling, where a first DPU 1 belongs to a first operator and a second DPU 2 belongs to a second operator. In such a situation, theoretically vectoring (to obtain crosstalk cancellation) would be possible, but different operators do not always allow access to each others systems. More generally, in multi-pair DPUs (e.g. Figures 1A and 1B), intra-DPU crosstalk cancellation can be foreseen, but inter-DPU crosstalk cancellation may not be present. A similar reasoning holds for single-port DPU's, see figure 1C where two DPU's are located in the same manhole. Crosstalk cancellation between multiple co-located single-port DPUs 1, 2 may not be possible, while some form of crosstalk may be present. Also in cases of fiber-to-the-building illustrated in figure 1D, where a DPU 1 is located e.g. in the cellar and different lines go to the different floors, there may be crosstalk between the different lines.

Embodiments of the invention are based on the insight of the inventors that the underlying issue is stability: while legacy xDSL is always on, G.fast uses discontinuous operation and low power modes in which symbol positions are empty when there is no data to send. This will cause fluctuations in crosstalk observed in other lines, and hence impact the stability of those lines.

A possible solution would be to increase the noise margin or virtual noise. However, this will create a fixed capacity reduction, and the selection of the appropriate margin may not be straightforward. Another solution would be to add a vectoring functionality. However, in case of distributed DPUs, this requires centralized vectoring processing, with its burden on backhaul bandwidth due to need for conveying mapped frequency domain samples, latency due to the potential addition of twice a backhaul link in the retransmission round-trip-time, and cost due to additional components. Also, in case of unbundling, this causes that all operators need to invest in vectoring.

Embodiments of the invention are based on the insight of the inventors that it is possible to enable time division multiple access to the lines, without altering the G.fast specification. This may be achieved through coordination of Timing Control Entity (TCE) and Dynamic Resource Allocation (DRA) functionalities. The lines may be grouped in separate sets. Lines from the same set are allowed to transmit simultaneously but not allowed to transmit simultaneously with lines from other sets. This grouping may be crosstalk estimation based or may be operator configured.

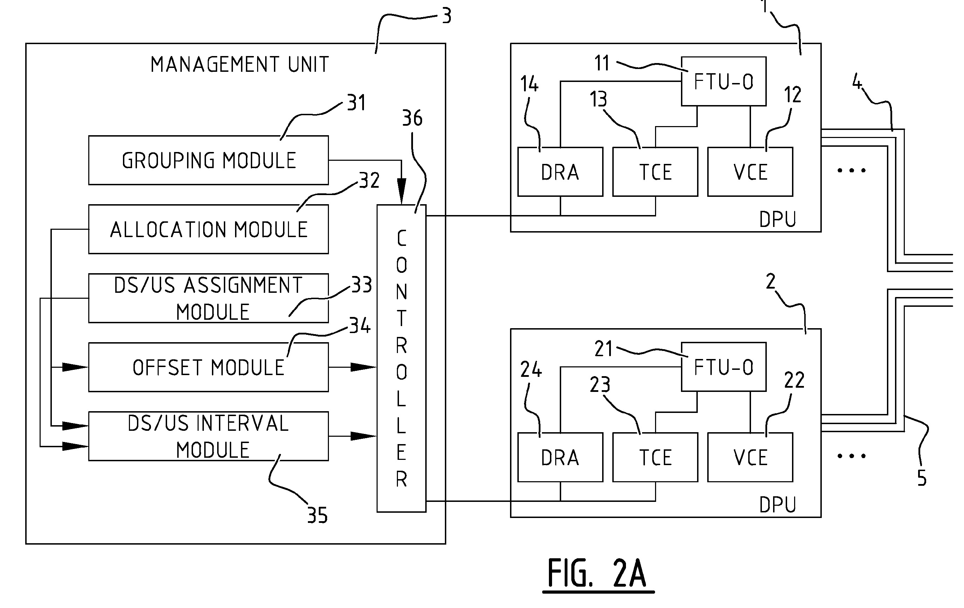

Figure 2A illustrates an embodiment of a system of the invention. The system comprises a first DPU 1 for a number of lines 4, a second DPU 2 for a number of lines 5, as well as a management unit 3. The lines 4, 5 lead to different user subscriber devices, also called end-user devices or customer premises equipment. Each DPU 1, 2 comprises a Fast Transceiver Unit (FTU-0) 11, 21, a Vectoring Control Entity (VCE) 12, 22, a Timing Control Entity (TCE) 13, 23, and a Dynamic Resource Allocation (DRA) controller 14, 24. The management unit 3 controls the TCE's 13, 23, and the DRA controllers 14, 24. A detailed description of those components can be found in ITU, Telecommunication Standardization Sector, Temporary document 2013-09-Q4-R20R1, draft text for G.fast, see in particular figure 6.2 and the description of the components shown in that figure. This draft text for G.fast is included herein by reference.

The FTU-0 11 comprises for each line 4 a transceiver. The VCE 12 is configured to control vectoring. Time division duplexing (TDD) frame synchronization between the lines 4 is controlled by the TCE 13. By default, the TCE 13 aligns the start of the downstream transmission period or sub-frame for each line.

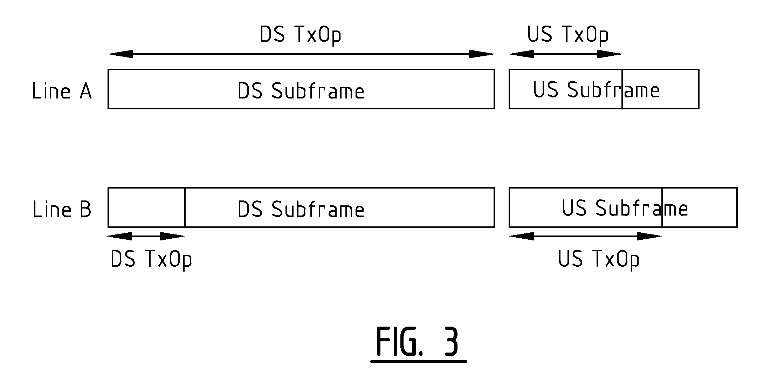

An embodiment of the prior art is illustrated in figure 3. The upstream/downstream (US/DS) split ratio is controlled by the Dynamic Resource Allocation (DRA) controller 14, 24. This controller defines the amount of downstream and upstream time slots in the DS and US sub-frames. Whether for any given line the full sub-frame can be occupied by data symbols is also under control of the Dynamic Resource Allocation (DRA) controller 14, 24. For instance, in figure 3, line A is allocated to use the full DS sub-frame, indicated by "DS TXOP", while line B is only allocated to use a fraction of its DS sub-frame, indicated by "DS TXOP". If lines A and B crosstalk, they will observe stability issues in the absence of vectoring.

In the embodiment of figure 2A the management unit 3 comprises:

- a grouping module 31 configured for grouping the lines 4, 5 in a plurality of sets; e.g. the grouping module 31 may be configured to perform the grouping based on estimated crosstalk between the plurality of lines;
- an allocation module 32 configured for allocating a number of time slots to each set;
- a DS/US assignment module 33 configured for assigning for each set a number of time slots of the allocated number that may be used for downstream transmission;
- an offset determining module 34 configured for determining for each set an offset time indicating the start of a downstream transmission period or sub-frame based on the allocated time slots;
- an upstream/downstream interval determining module 35 configured for determining, for each set, an upstream/downstream interval indicating a number of time slots between the start of a downstream sub-frame and the start of an upstream sub-frame for said set, taking into account the allocated time slots and the time slots thereof assigned for downstream transmission for the different sets;
- a controller 36 configured for controlling said DPU's 1, 2, and in particular the TCE's 13, 23 and the DRA controllers 14, 24; in order to allow the lines of a set to simultaneously transmit data during the allocated number of time slots, whilst not allowing the other sets to transmit. More in particular the controller is configured to control the DPU's 1, 2 in accordance with the determined offset times, and the determined upstream/downstream intervals.

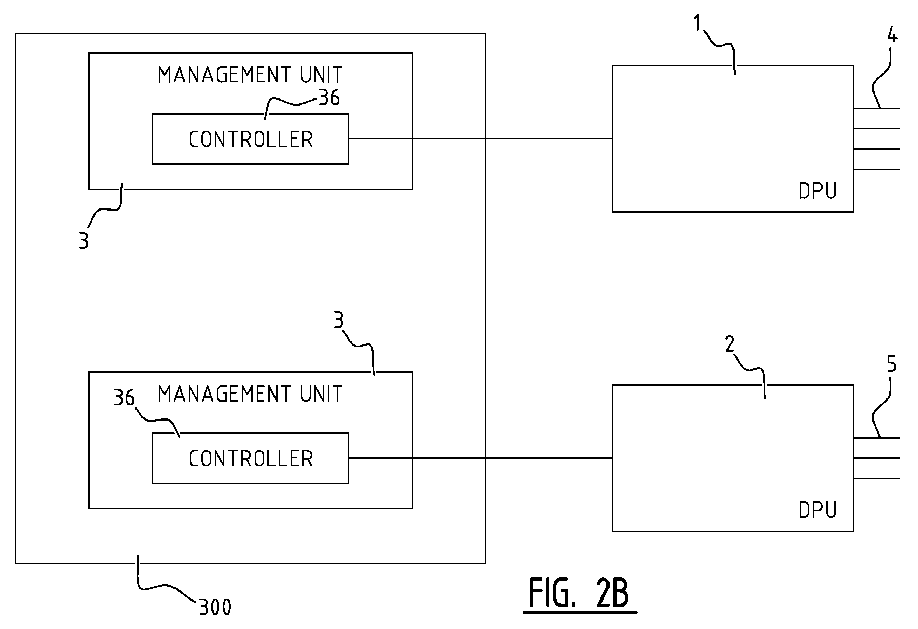

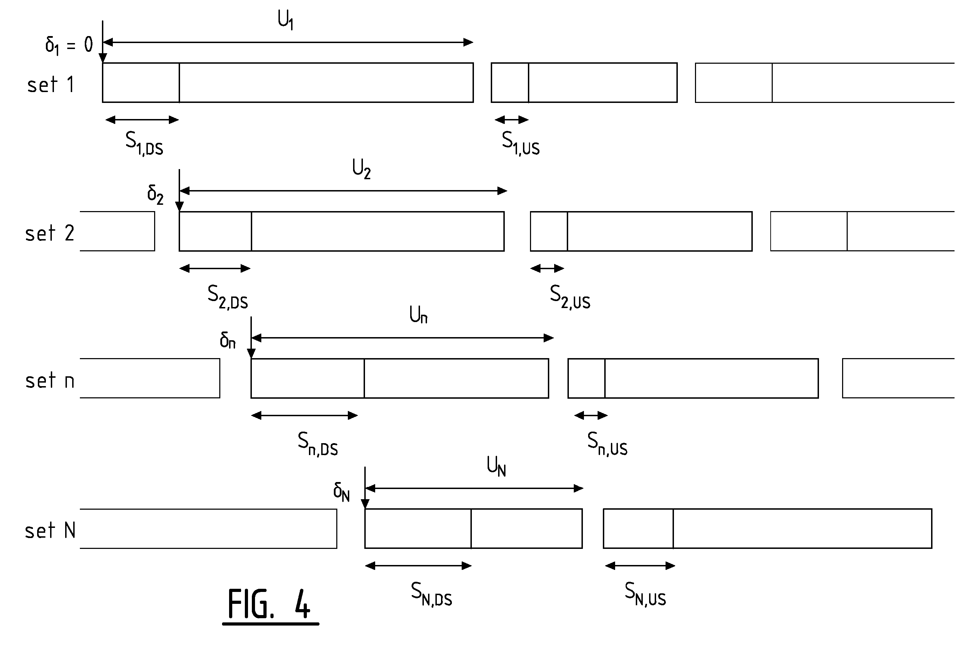

Now an embodiment of the method and system of the invention will be explained in detail with reference to figures 2A-2B and 4. According to an embodiment of the invention, the lines 4, 5 are grouped into N sets or TDMA groups. This grouping may be based on crosstalk estimation, wherein preferably two lines showing a significant amount of crosstalk are put in a different TDMA group. In the example of figure 2A there is one overall management unit 3 with one controller 36 which simultaneously controls different DPU's. Such a situation may e.g. occur in an implementation with multiple 1-port DPUs (figure 1C). Alternatively, as illustrated in figure 2B there can be a controller 36 per TDMA group or per DPU. E.g. in an unbundling situation where different DPUs are owned by different operators there may be provided a management system 300 with two management units 3 each having a controller 36 (for each DPU 1, 2). In such a situation the TDMA groups may be set e.g. by the operator, and the allocated times slots could be preconfigured. The DS/US assignment could be performed by each management unit 3 separately.

In the embodiment of figure 2A the slots allocations can be quickly adapted during show time, depending on user needs, whilst in the embodiment of figure 2A the slot allocations are typically fixed for a certain time. Depending on the option, different degrees of freedom are available.

The management unit 3 coordinates the TCE's 13, 23 and the DRA controllers 14, 24 in the following fashion.

In a first step a target number of DMT slots is allocated to each TDMA group, wherein the total number of allocated target DMT slots does not exceed the number of symbols in a frame. This may be performed by the allocation module 32. The DS/US assignment module 33 determines for each TDMA group which part of the allocated slots may be used for downstream transmission. Mathematically, there is allocated to each TDMA group n a number of DS and US symbol slots $S_{n,DS}$ and $S_{n,US}$, such that

$$\sum_{n=1}^{N}(S_{n,DS} + S_{n,US})+1 \leq S_{frame} \quad \text{[Equation 1]}$$

with $S_{frame}$ the number of symbol slots in a frame, typically the number of DMT (digital multi tone) slots in a TDD frame. Typically, a time gap exists between a downstream sub-frame and an upstream sub-frame; and between an upstream sub-frame and a downstream sub-frame. Due to this gap, the sum over n of $S_{n,DS} + S_{n,US}$, i.e. the number of assigned symbol slots in a frame may be lower than the frame period $S_{frame}$. At the minimum, there are two gaps with a total gap time of one symbol period.

In a typical embodiment, there is at least one DMT symbol per TDMA group per transmission direction. If only one symbol per direction is allocated, then the first frame of the superframe does not contain data, but only a synchronization symbol. The allocating can be based on the desired peak rate for the TDMA group.

In a second step the frame synchronization of the different TDMA groups are staggered through the offset determination module 34, the controller 36 and the TCE's 13, 23. The synchronization offset between two consecutive TDMA groups is a function of the allocated time slots for the previous TDMA group. If the downstream transmission of all sets come before the upstream transmission of any set (as in Figure 4), mathematically, the TCE offset of TDMA group n compared to TDMA group 1 is:

$$\delta_n = \sum_{m=1}^{n-1} S_{m,DS} \quad \text{[Equation 2]}$$

This offset is illustrated in figure 4.

In a third step the DRA controller 14, 24 (controlled by controller 36) assigns to each TDMA group a downstream/upstream ratio such that also the start of the upstream sub-frames are staggered. Mathematically the start of US sub-frame for TDMA group n, compared to first symbol of TDMA group 1 is:

$$\sum_{m=1}^{N} S_{m,DS} + \sum_{m=1}^{n-1} S_{m,US} + \text{Guard Interval} \qquad [\text{Equation 3}]$$

where the guard interval typically equals approximately 1/2, i.e. the length of the guard interval time between downstream and upstream sub-frames is typically ½ symbol time. The US/DS split, as configured by DRA controller 14, 24, for group 1 is the difference between Equation 3 and the TCE offset for group n (Equation 2):

$$U_n = \sum_{m=n}^{N} S_{m,DS} + \sum_{m=1}^{n-1} S_{m,US} \qquad [\text{Equation 4}]$$

where $U_n$ is the upstream/downstream interval identifying the first upstream symbol of TDMA group n relative to the first DS symbol of group n, see also figure 4.

In a fourth step the DRA controller 14, 24 assigns to each TDMA group a downstream slot allocation and upstream slot allocation within the constraints imposed by the previous steps. The maximum number of allocated DS and US slots for group n are $S_{n,DS}$ and $S_{n,US}$ respectively. For each line the number of slots allocated can be further restricted in run-time depending on utilization. This means that not all grey symbol slots in Figure 4 may be occupied for any given frame, depending on traffic.

In the embodiment of figure 4 a "pure" TDMA technique was used. A drawback of such an embodiment is the lack of availability of peak rate when multiple users are active simultaneously (each with their latency constraint). However in more advanced embodiments of the invention, peak rates can still be achieved. Such advanced embodiments are based *inter alia* on the insight that the second step is static in show time, but that the third and fourth steps allow reconfiguration in show time. In that respect, the target number of DMT slots configured during the first step can take into account the flexibility in actual allocation due to steps 3 and 4.

In upstream, for instance, the third step allows dynamically re-allocating upstream slot allocations among the TDMA groups depending on actual user demand within a TDMA group, which allows for statistical multiplexing in upstream. A benefit of such statistical multiplexing in upstream is that proportionally less time slots must be allocated to upstream to achieve the targeted performance. This frees up time slots for downstream allocation.

In downstream, in order to deal with peak rates, the procedure may involve coordination with sleep modes. First an example is given where peak downstream rates for group n are achieved through low power modes on group n+1. After that, a more general view is given for allowing peak rates for group n, while introducing low power modes for an arbitrary group m (or for multiple groups).

Low power modes may be introduced on group n+1 under DRA control. It will be assumed that it is desirable to temporarily increase the data rate for group n in the downstream transmission direction. In a first step it is determined for which subset of frames TDMA group n is allowed to peak. In a second step the respective DRA controller allocates zero time slots to the downstream transmission direction of group n+1 for the selected subset of frames. In a third step the respective DRA controller allocates ($S_{n,DS}$ + $S_{n+1,DS}$) symbol slots to group n for the selected frames. In the special case where n=N, the respective DRA controller can flexibly shift all upstream slot assignments to the latter part of the frame, freeing up resources for downstream peak rates of user N (so that a sleep mode is not required).

More generally, time allocated to TDMA group m may be re-allocated to TDMA group n by toggling between different states in which the TDMA groups with indices between n and m are toggled between active and sleep mode states.

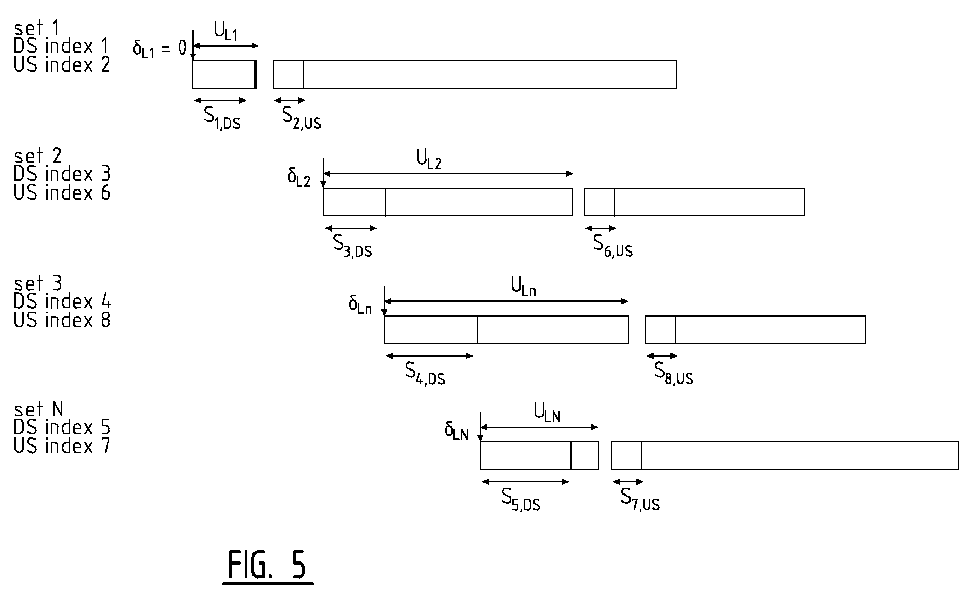

In further developed embodiments, the upstream and downstream may be viewed as separate TDMA groups, where the generalized solution has 2N TDMA groups. These TDMA groups can have any arbitrary order, as exemplified in Figure 5. Figure 5 illustrates an exemplary embodiment where any downstream transmission period of a TDMA group may be followed by any other downstream or upstream transmission period of any other TDMA group. Typically, this will imply more gaps, and a smaller number of symbol frames that may be allocated:

$$\sum_{n=1}^{N} (S_{n,DS} + S_{n,US}) + \frac{x}{2} \leq S_{frame} \qquad [\text{Equation 5}]$$

with $S_{frame}$ the number of symbol slots in a frame, and x is the number of guard intervals. At the minimum, there are two gaps with a total gap time of one symbol period.

The pro's of grouping all downstream groups first, and then all upstream groups is the following. Due to the synchronization offset of upstream and downstream of half a symbol on average, a full symbol position is lost for each downstream-upstream-downstream transition. This symbol position cannot be re-used by another TDMA group, but this is a minor effect. For instance, for the default G.fast frame size comprising 36 symbol positions and for 5 TDMA groups, one can allocate 7 symbols per TDMA group by grouping all DS groups first. And one can allocate between 6.2 and 7 TDMA groups by exploiting the flexibility of frequent alterations. The pro's of frequently alternating upstream and downstream allocations within a frame are that it allows more flexible re-allocation of slots among the users. Indeed, the upstream/downstream split in the third step can easily be shifted, giving higher or lower downstream rates for each of the users.

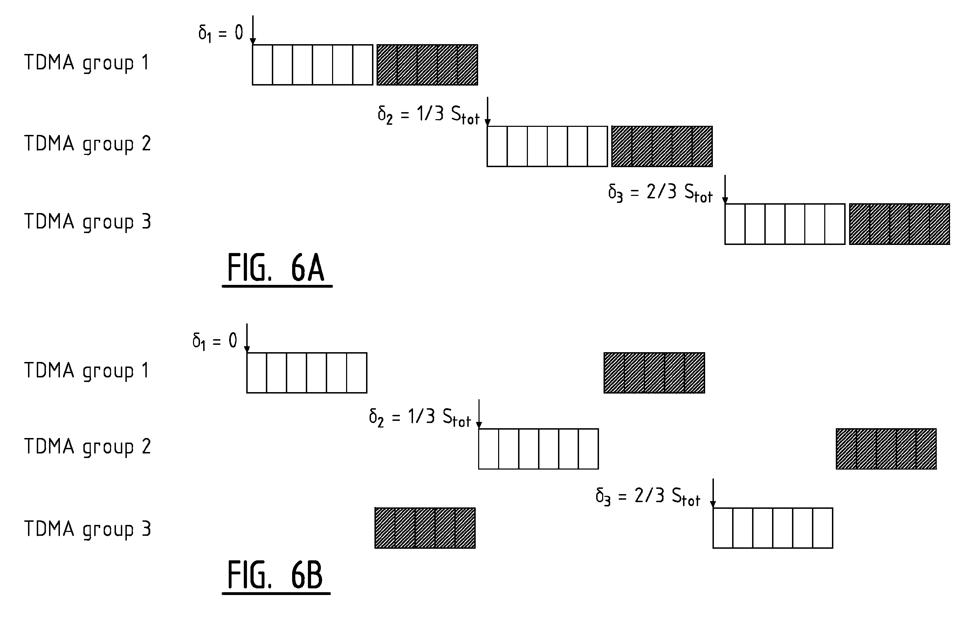

Figures 6-10 illustrate further exemplary embodiments for three TDMA groups (N = 3) using a G.fast frame comprising thirty six symbol positions ($S_{frame}$ = 36).

In the embodiments of figures 6A and 6B, the TCE offsets $\delta_n$ are chosen to be equidistant, i.e. $\delta_n$ = (n-1) $S_{frame}$/N. In alternative embodiments, TDMA groups can be given different weights in order to allow a higher peak rate for one group compared to another, or to take into account differences in loop length. While the TCE offsets $\delta_n$ are fixed at initialization, the upstream/downstream slot allocations remain flexible during show time. The reason for having fixed TCE offsets $\delta_n$ is that in order to change the offsets the lines have to be restarted, causing delays.

In figure 6A, the upstream allocation (dark grey) immediately follows the downstream allocation (light grey). The non-allocated slots are positioned in the upstream sub-frame (white). In figure 6B, there are non-allocated slots in both the downstream and upstream sub-frames (white), creating a gap between the upstream allocated slots (US TXOP) and the downstream allocated slots (DS TXOP). This situation may be favorable to reduce retransmission round trip time. The gap allows for processing time, such that the last symbol in DS TXOP may already be acknowledged during the following US TXOP, and vice versa.

In the embodiments of figure 6A and figure 6B, there are six downstream/upstream transitions, typically resulting in 3 symbol positions being lost. In other words thirty three symbol positions may be used for actual transmission.

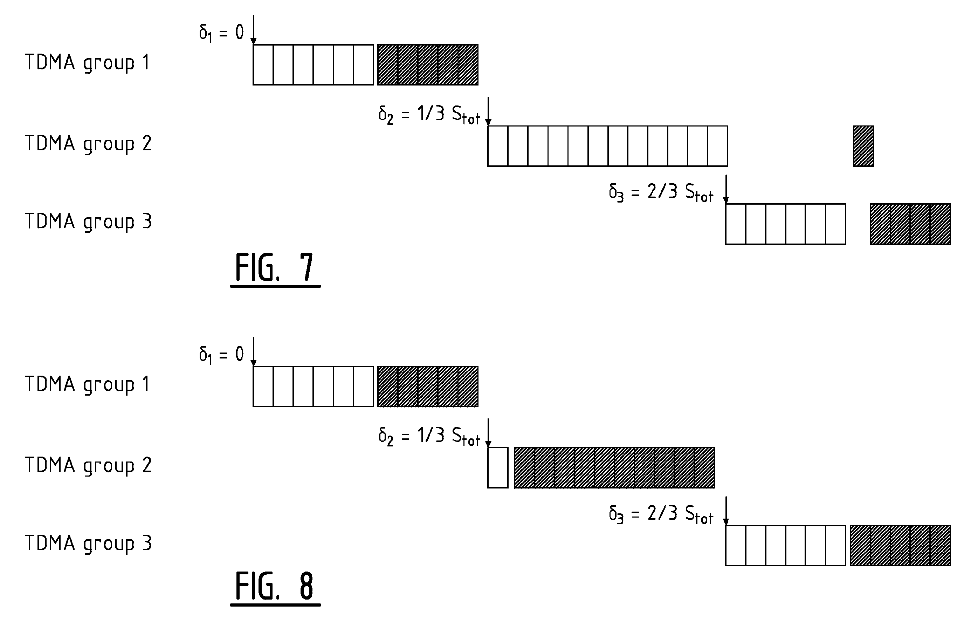

In the embodiment of figure 7, peak downstream rate is given to TDMA group 2, with minimal impact on another randomly or purposely selected TDMA group. While the required US slot for TDMA group 2 may follow the DS immediately, the highest DS rate for group 2 is obtained when its US TXOP is shifted to a later point in time, here after the downstream transmission of TDMA group 3. There are four downstream/upstream transitions, typically resulting in approximately 2 symbol positions being lost. In other words thirty four symbol positions may be used for actual transmission.

In the embodiment of figure 8, peak upstream rate is given to TDMA group 2, without impacting the other TDMA groups. There are six downstream/upstream transitions, typically resulting in approximately 3 symbol positions being lost. In other words thirty three symbol positions may be used for actual transmission.

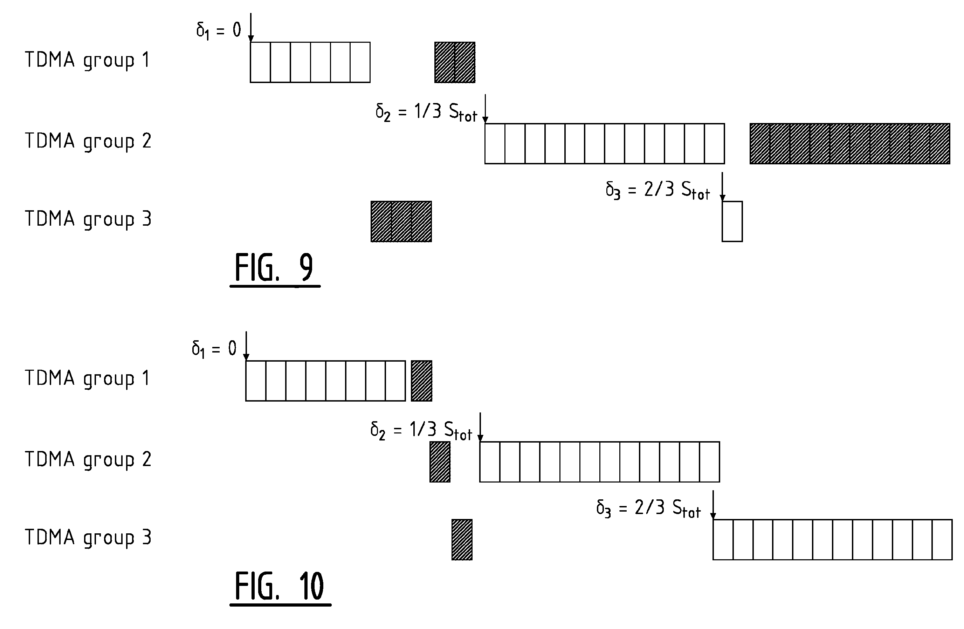

In the embodiment of figure 9, TDMA group 2 is given simultaneous downstream and upstream peak rate. The remaining TDMA slots may be distributed between the other TDMA groups according to their current needs. There are four downstream/upstream transitions, typically resulting in approximately 2 symbol positions being lost. In other words thirty four symbol positions may be used for actual transmission.

Lastly, in the embodiment of figure 10, it is shown that the maximum number of symbol slots that can be used for data transmission is $S_{frame}$-1, just as in regular G. fast . As compared to figures 6-9, one or two additional data slots are available through grouping the US TXOP of the different TDMA groups.

Although in the embodiments discussed above, two sets (TDMA groups) never transmit simultaneously, the skilled person understands that, in the event that the demand in the sets is very high it may be decided to allow some or all sets to transmit simultaneously. For instance, it may be useful to allow simultaneous transmission for sets with low mutual crosstalk, in order to benefit those or other sets.

The equations 1-4 formulated above for the embodiment of figure 4 have the purpose of giving the reader a better understanding of the invention, but the skilled person understands that other equations can be formulated for the other embodiments of the invention.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The functions of the various elements shown in the figures, including any functional blocks labeled as "processor" or "controller" or "module", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. Method for transmitting data between a number of distribution point units (DPU's) and a number of end-user devices, over a plurality of lines, said method comprising:

   grouping said plurality of lines in at least a first set and a second set;
   allocating a first number of time slots to said first set;
   and a second number of times slots to said second set;
   allowing the lines of said first set to simultaneously transmit data during said first number of time slots; and
   allowing the lines of said second set to simultaneously transmit data during said second number of time slots, wherein said allowing is controlled in such a way that said first set and said second set transmit at different moments in time; **characterized in that** the method further comprises: assigning a first and second downstream/upstream ratio for said first and said second set, respectively; said first and second downstream/upstream ratio defining the number of time slots of said first number and said second number that may be used for downstream transmission and upstream transmission, respectively; wherein downstream transmission corresponds with a transmission from a DPU to an end user device and upstream transmission corresponds with a transmission from an end user device to a DPU;
   wherein said first set and said second set comprises at least two lines;
   wherein for said first and said second set a first and a second offset time is determined, said first and said second offset time indicating the start of a transmission period for said first set and said second set with respect to a common time reference, respectively;
   wherein said first and said second set is allowed to start transmission at said first and said second offset time ($\delta_1$;$\delta_2$) during a first and a second period ($S_{1,DS}$;$S_{2,DS}$) corresponding with said first and said second downstream/upstream ratio, respectively.

2. Method of claim 1, wherein said first and/or said second downstream/upstream ratio is determined in function of the downstream and/or upstream traffic demands for said first set and/or said second set, respectively.

3. Method of any one of the previous claims, wherein said grouping is performed based on estimated crosstalk between the lines.

4. Method of any one of the previous claims, wherein said second set is allowed to perform downstream transmission immediately after said first set is allowed to perform downstream transmission; and/or wherein said second set is allowed to perform upstream transmission immediately after said first set is allowed to perform upstream transmission.

5. Method of any one of the previous claims, wherein the downstream/upstream ratio is applied by a dynamic resource allocation (DRA) controller, and wherein the first an second offset time are set by a time control entity (TCE) in a G.fast environment.

6. Management system for controlling the transmission of data between a number of DPU's and a number of end user devices, over a plurality of lines, said system comprising:

a grouping module (31) configured for grouping said plurality of lines in at least a first set and a second set;
an allocation module configured for allocating a first number of time slots to said first set; and a second number of times slots to said second set;
a controller (36) configured for controlling said number of DPU's in order to allow the lines of said first set to simultaneously transmit data during said first number of time slots; and to allow the lines of said second set to simultaneously transmit data during said second number of time slots, and such that said first set and said second set transmit at different moments in time; **characterized in that** the system further comprises:

a downstream/upstream assignment module (33) configured for assigning a first and second downstream/upstream ratio for said first and said second set, indicating the number of time slots of said first number and said second number that may be used for downstream transmission and for upstream transmission, respectively; wherein downstream transmission corresponds with a transmission from a DPU to a end user device and upstream transmission corresponds with a transmission from a end user devices to a DPU; and
an offset determining module (24) configured for determining for said first and said second set a first and a second offset time, said first and said second offset time indicating the start of a transmission period for said first set and said second set with respect to a common time reference, respectively; said controller being configured to communicate said first and second offset time to said number of DPU's;
wherein said first set and said second set comprises at least two lines.

7.   System of claim 6, wherein the downstream/upstream assignment module is configured for determining said first and/or said second downstream/upstream ratio in function of the downstream and/or upstream traffic demands for said first set and/or said second set, respectively.

8.   System of claim 6 or 7, wherein the grouping module is configured to perform the grouping based on estimated crosstalk between the plurality of lines.

9.   System of any one of the claims 6-8, comprising an upstream/downstream interval determining module (35) configured for determining a first and a second upstream/downstream interval ($U_1$ and $U_2$) indicating a number of time slots between the start of a downstream transmission period for said first set and said second set and the start of an upstream transmission period for said first set and said second set, respectively.

10.   The system of any one of the claims 6-9, further comprising a dynamic resource allocation (DRA) controller (14) and a time control entity (TCE)(13), in a G.fast environment; wherein the controller (36) is configured to control the dynamic resource allocation (DRA) controller in accordance with the assigned downstream/upstream ratio, and to control the time control entity (TCE) to set the first an second offset time.

11.   Computer device programmed to perform one or more steps of the method of any one of the claims 1-5 or programmed to perform the function of any one or more modules of the management system of any one of the claim 6-10.

**Patentansprüche**

1.   Verfahren zur Datenübertragung zwischen einer Anzahl von Verteilungspunkteinheiten (DPUs) und einer Anzahl von Endbenutzervorrichtungen, über eine Vielzahl von Leitungen, wobei besagtes Verfahren Folgendes umfasst:

Gruppieren der besagten Vielzahl von Leitungen in mindestens eine erste Menge und eine zweite Menge;
Vergeben einer ersten Anzahl von Zeitschlitzen an die besagte erste Menge;
und einer zweiten Anzahl von Zeitschlitzen an die besagte zweite Menge;
Zulassen, dass die Leitungen der besagten ersten Menge Daten während der besagten ersten Anzahl von Zeitschlitzen gleichzeitig übertragen; und
Zulassen, dass die Leitungen der besagten zweiten Menge Daten während der besagten zweiten Anzahl von Zeitschlitzen gleichzeitig übertragen,
wobei das besagte Zulassen so gesteuert wird, dass die besagte erste Menge und die besagte zweite Menge zu unterschiedlichen Zeitpunkten übertragen; **dadurch gekennzeichnet, dass** das Verfahren weiterhin Folgendes umfasst:

Zuweisen eines ersten und zweiten Abwärts/Aufwärts-Verhältnisses jeweils für die besagte erste und die besagte zweite Menge; wobei das besagte erste und zweite Abwärts/Aufwärts-Verhältnis die Anzahl von Zeitschlitzen von der besagten ersten Anzahl und der besagten zweiten Anzahl definiert, die jeweils zur Abwärtsübertragung und Aufwärtsübertragung verwendet werden können; wobei die Abwärtsübertragung mit einer Übertragung von einer DPU zu einer Endbenutzervorrichtung übereinstimmt und die Aufwärtsübertragung mit einer Übertragung von einer Endbenutzervorrichtung zu einer DPU übereinstimmt;

wobei die besagte erste Menge und die besagte zweite Menge mindestens zwei Leitungen umfassen;

wobei für die besagte erste und die besagte zweite Menge eine erste und eine zweite Versatzzeit bestimmt wird, wobei die besagte erste und die besagte zweite Versatzzeit den Start einer Übertragungsdauer jeweils für die besagte erste Menge und die besagte zweite Menge mit Bezug auf eine gemeinsame Zeitreferenz angeben;

wobei die besagte erste und die besagte zweite Menge die Übertragung zur besagten ersten und zur besagten zweiten Versatzzeit ($\delta_1$; $\delta_2$) während einer ersten und einer zweiten Dauer ($S_{1,DS}$; $S_{2,DS}$) jeweils in Übereinstimmung mit dem besagten ersten und dem besagten zweiten Abwärts/Aufwärts-Verhältnis starten dürfen.

2. Verfahren nach Anspruch 1, wobei das besagte erste und/oder das besagte zweite Abwärts/Aufwärts-Verhältnis in Abhängigkeit von den Abwärts- und/oder Aufwärtsverkehrsanforderungen jeweils für die besagte erste Menge und/oder die besagte zweite Menge bestimmt werden.

3. Verfahren nach einem beliebigen der vorstehenden Ansprüche, wobei das besagte Gruppieren basierend auf einem geschätzten Nebensprechen zwischen den Leitungen erfolgt.

4. Verfahren nach einem beliebigen der vorstehenden Ansprüche, wobei die besagte zweite Menge die Abwärtsübertragung durchführen darf, unmittelbar nachdem die besagte erste Menge die Abwärtsübertragung durchführen darf; und/oder wobei die besagte zweite Menge die Aufwärtsübertragung durchführen darf, unmittelbar nachdem die besagte erste Menge die Aufwärtsübertragung durchführen darf.

5. Verfahren nach einem beliebigen der vorstehenden Ansprüche, wobei das Abwärts/Aufwärts-Verhältnis von einem Controller zur dynamischen Ressourcenvergabe (DRA) angewendet wird, und wobei die erste und zweite Versatzzeit von einer Zeitsteuerungsentität (TCE) in einer G.fast-Umgebung festgelegt werden.

6. Verwaltungssystem zum Steuern der Übertragung von Daten zwischen einer Anzahl von DPUs und einer Anzahl von Endbenutzervorrichtungen, über eine Vielzahl von Leitungen, wobei besagtes System Folgendes umfasst:

ein Gruppierungsmodul (31), das ausgelegt ist zum Gruppieren der besagten Vielzahl von Leitungen in mindestens eine erste Menge und eine zweite Menge;

ein Vergabemodul, das ausgelegt ist zum Vergeben einer ersten Anzahl von Zeitschlitzen an die besagte erste Menge; und einer zweiten Anzahl von Zeitschlitzen an die besagte zweite Menge;

einen Controller (36), der ausgelegt ist zum Steuern der besagten Anzahl von DPUs, um zuzulassen, dass die Leitungen der besagten ersten Menge Daten während der besagten ersten Anzahl von Zeitschlitzen gleichzeitig übertragen; und um zuzulassen, dass die Leitungen der besagten zweiten Menge Daten während der besagten zweiten Anzahl von Zeitschlitzen gleichzeitig übertragen, und so dass die besagte erste Menge und die besagte zweite Menge zu unterschiedlichen Zeitpunkten übertragen; **dadurch gekennzeichnet, dass** das System weiterhin Folgendes umfasst:

ein Abwärts/Aufwärts-Zuweisungsmodul (33), das ausgelegt ist zum Zuweisen eines ersten und zweiten Abwärts/Aufwärts-Verhältnisses für die besagte erste und die besagte zweite Menge, wobei die Anzahl von Zeitschlitzen von der besagten ersten Anzahl und der besagten zweiten Anzahl angegeben wird, die jeweils zur Abwärtsübertragung und zur Aufwärtsübertragung verwendet werden können; wobei die Abwärtsübertragung mit einer Übertragung von einer DPU zu einer Endbenutzervorrichtung übereinstimmt und die Aufwärtsübertragung mit einer Übertragung von einer Endbenutzervorrichtung zu einer DPU übereinstimmt; und

ein Versatzbestimmungsmodul (24) das ausgelegt ist zum Bestimmen einer ersten und einer zweiten Versatzzeit für die besagte erste und die besagte zweite Menge, wobei die besagte erste und die besagte zweite Versatzzeit den Start einer Übertragungsdauer jeweils für die besagte erste Menge und die besagte zweite Menge mit Bezug auf eine gemeinsame Zeitreferenz angeben; wobei der besagte Controller ausgelegt ist, um die besagte erste und zweite Versatzzeit der besagten Anzahl von DPUs mitzuteilen;

wobei die besagte erste Menge und die besagte zweite Menge mindestens zwei Leitungen umfassen.

7. System nach Anspruch 6, wobei das Abwärts/Aufwärts-Zuweisungsmodul ausgelegt ist zum Bestimmen des besagten ersten und/oder des besagten zweiten Abwärts/Aufwärts-Verhältnisses in Abhängigkeit von den Abwärts- und/oder Aufwärtsverkehrsanforderungen jeweils für die besagte erste Menge und/oder die besagte zweite Menge.

8. System nach Anspruch 6 oder 7, wobei das Gruppierungsmodul ausgelegt ist zum Durchführen der Gruppierung basierend auf einem geschätzten Nebensprechen zwischen der Vielzahl von Leitungen.

9. System nach einem beliebigen der Ansprüche 6-8, umfassend ein Aufwärts/Abwärts-Intervallbestimmungsmodul (35), das ausgelegt ist zum Bestimmen eines ersten und eines zweiten Aufwärts/Abwärts-Intervalls ($U_1$ und $U_2$), wobei eine Anzahl von Zeitschlitzen jeweils zwischen dem Start einer Abwärtsübertragungsdauer für die besagte erste Menge und die besagte zweite Menge und dem Start einer Aufwärtsübertragungsdauer für die besagte erste Menge und die besagte zweite Menge angegeben wird.

10. System nach einem beliebigen der Ansprüche 6-9, weiterhin umfassend einen Controller (14) zur dynamischen Ressourcenvergabe (DRA) und eine Zeitsteuerungsentität (TCE) (13) in einer G.fast-Umgebung; wobei der Controller (36) ausgelegt ist zum Steuern des Controllers zur dynamischen Ressourcenvergabe (DRA) in Übereinstimmung mit dem zugewiesenen Abwärts/Aufwärts-Verhältnis und zum Steuern der Zeitsteuerungsentität (TCE), um die erste und zweite Versatzzeit festzulegen.

11. Computervorrichtung, die programmiert ist zum Ausführen eines oder mehrerer Schritte des Verfahrens nach einem beliebigen der Ansprüche 1-5, oder die programmiert ist zum Ausführen der Funktion von einem oder mehreren Modulen des Verwaltungssystems nach einem beliebigen der Ansprüche 6-10.

**Revendications**

1. Procédé de transmission de données entre un certain nombre d'unités de point de distribution (DPU) et un certain nombre de dispositifs d'utilisateurs finaux, sur une pluralité de lignes, ledit procédé comprenant les étapes suivantes :
   regrouper ladite pluralité de lignes dans au moins un premier ensemble et un deuxième ensemble ;
   attribuer un premier nombre de créneaux temporels audit premier ensemble ; et un deuxième nombre de créneaux temporels audit deuxième ensemble ; autoriser les lignes dudit premier ensemble à transmettre simultanément des données durant ledit premier nombre de créneaux temporels ; et autoriser les lignes dudit deuxième ensemble à transmettre simultanément des données durant ledit deuxième nombre de créneaux temporels, dans lequel ladite autorisation est contrôlée de manière à ce que ledit premier ensemble et ledit deuxième ensemble transmettent à différents moments ; **caractérisé en ce que** le procédé comprend en outre l'étape suivante :

   attribuer un premier et un deuxième rapports aval/amont pour ledit premier ensemble et ledit deuxième ensemble, respectivement ; lesdits premier et deuxième rapports aval/amont définissant le nombre de créneaux temporels dudit premier nombre et dudit deuxième nombre qui peuvent être utilisés pour la transmission aval et la transmission amont, respectivement ; dans lequel la transmission aval correspond à une transmission entre un DPU et un dispositif d'utilisateur final et la transmission amont correspond à une transmission entre un dispositif d'utilisateur final et un DPU ; dans lequel ledit premier ensemble et ledit deuxième ensemble comprennent au moins deux lignes ;
   dans lequel pour lesdits premier et deuxième ensembles un premier et un deuxième temps de décalage sont déterminés, lesdits premier et deuxième temps de décalage indiquant le début d'une période de transmission pour ledit premier ensemble et ledit deuxième ensemble par rapport à une référence temporelle commune, respectivement ;
   dans lequel lesdits premier et deuxième ensembles sont autorisés à commencer une transmission auxdits premier et deuxième temps de décalage ($\delta_1$; $\delta_2$) durant une première et une deuxième période ($S_{1, DS}$; $S_{2, DS}$) correspondant auxdits premier et deuxième rapports aval/amont, respectivement.

2. Procédé selon la revendication 1, dans lequel ledit premier et/ou ledit deuxième rapport(s) aval/amont est/sont déterminé(s) en fonction des demandes de trafic amont et/ou aval pour ledit premier ensemble et/ou ledit deuxième ensemble, respectivement.

3. Procédé selon l'une quelconque des revendications précédentes, dans lequel ledit regroupement est réalisé sur la base d'une diaphonie estimée entre les lignes.

4. Procédé selon l'une quelconque des revendications précédentes, dans lequel ledit deuxième ensemble est autorisé à effectuer une transmission aval immédiatement après que ledit premier ensemble est autorisé à effectuer une transmission aval ; et/ou dans lequel ledit deuxième ensemble est autorisé à effectuer une transmission amont immédiatement après que ledit premier ensemble est autorisé à effectuer une transmission amont.

5. Procédé selon l'une quelconque des revendications précédentes, dans lequel le rapport aval/amont est appliqué par un contrôleur d'allocation dynamique des ressources (DRA) et dans lequel les premier et deuxième temps de décalage sont définis par une entité de contrôle du temps (TCE) dans un environnement G. fast.

6. Système de gestion pour contrôler la transmission de données entre un certain nombre de DPU et un certain nombre de dispositifs d'utilisateurs finaux, sur une pluralité de lignes, ledit système comprenant: un module de regroupement (31) configuré pour regrouper ladite pluralité de lignes dans au moins un premier ensemble et un deuxième ensemble ;
un module d'attribution configuré pour attribuer un premier nombre de créneaux temporels audit premier ensemble ; et un deuxième nombre de créneaux temporels audit deuxième ensemble ;
un contrôleur (36) configuré pour contrôler ledit nombre de DPU afin d'autoriser les lignes dudit premier ensemble à transmettre simultanément des données durant ledit premier nombre de créneaux temporels ; et d'autoriser les lignes dudit deuxième ensemble à transmettre simultanément des données durant ledit deuxième nombre de créneaux temporels, et de sorte que ledit premier ensemble et ledit deuxième ensemble transmettent à différents moments ; **caractérisé en ce que** le système comprend en outre :

un module d'attribution aval/amont (33) configuré pour attribuer un premier et un deuxième rapports aval/amont pour ledit premier ensemble et ledit deuxième ensemble, indiquant le nombre de créneaux temporels dudit premier nombre et dudit deuxième nombre qui peuvent être utilisés pour la transmission aval et la transmission amont, respectivement ; dans lequel la transmission aval correspond à une transmission entre un DPU et un dispositif d'utilisateur final et une transmission amont correspond à une transmission entre des dispositifs d'utilisateurs finaux et un DPU ; et
un module de détermination de décalage (24) configuré pour déterminer pour ledit premier et ledit deuxième ensembles un premier et un deuxième temps de décalage, ledit premier et ledit deuxième temps de décalage indiquant le début d'une période de transmission pour ledit premier ensemble et ledit deuxième ensemble par rapport à une référence temporelle commune, respectivement ; ledit contrôleur étant configuré pour communiquer lesdits premier et deuxième temps de décalage audit nombre de DPU ;
dans lequel ledit premier ensemble et ledit deuxième ensemble comprennent au moins deux lignes.

7. Système selon la revendication 6, dans lequel le module d'attribution aval/amont est configuré pour déterminer ledit premier et/ou ledit deuxième rapport(s) aval/amont en fonction des demandes de trafic amont et/ou aval pour ledit premier ensemble et/ou ledit deuxième ensemble, respectivement.

8. Système selon la revendication 6 ou 7, dans lequel le module de regroupement est configuré pour réaliser le regroupement sur la base d'une diaphonie estimée entre la pluralité de lignes.

9. Système selon l'une quelconque des revendications 6 à 8, comprenant un module de détermination d'intervalles amont/aval (35) configuré pour déterminer un premier et un deuxième intervalles amont/aval (U1 et U2) indiquant un nombre de créneaux temporels entre le début d'une période de transmission aval pour ledit premier ensemble et ledit deuxième ensemble et le début d'une période de transmission amont pour ledit premier ensemble et ledit deuxième ensemble, respectivement.

10. Système selon l'une quelconque des revendications 6 à 9, comprenant en outre un contrôleur (14) d'allocation dynamique des ressources (DRA) et une entité de contrôle du temps (TCE) (13), dans un environnement G. fast ; dans lequel le contrôleur (36) est configuré pour contrôler le contrôleur (14) d'allocation dynamique des ressources (DRA) conformément au rapport aval/amont attribué, et pour contrôler l'entité de contrôle du temps (TCE) pour définir les premier et deuxième temps de décalage.

11. Dispositif informatique programmé pour exécuter une ou plusieurs étapes du procédé selon l'une quelconque des revendications 1 à 5 ou programmé pour exécuter la fonction d'un quelconque ou de plusieurs modules du système de gestion selon l'une quelconque des revendications 6 à 10.

FIG. 1A

FIG. 1B

FIG. 1C

FIG. 1D

FIG. 2A

FIG. 2B

FIG. 3

EP 2 852 068 B1

FIG. 4

FIG. 5

EP 2 852 068 B1

$\delta_1 = 0$

TDMA group 1

$\delta_2 = 1/3 \; S_{tot}$

TDMA group 2

$\delta_3 = 2/3 \; S_{tot}$

TDMA group 3

## FIG. 6A

$\delta_1 = 0$

TDMA group 1

$\delta_2 = 1/3 \; S_{tot}$

TDMA group 2

$\delta_3 = 2/3 \; S_{tot}$

TDMA group 3

## FIG. 6B

FIG. 7

FIG. 8

EP 2 852 068 B1

$\delta_1 = 0$

TDMA group 1

$\delta_2 = 1/3\ S_{tot}$

TDMA group 2

$\delta_3 = 2/3\ S_{tot}$

TDMA group 3

## FIG. 9

$\delta_1 = 0$

TDMA group 1

$\delta_2 = 1/3\ S_{tot}$

TDMA group 2

$\delta_3 = 2/3\ S_{tot}$

TDMA group 3

## FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

*   US 20080123755 A